# EUROPEAN PATENT APPLICATION

(11) **EP 4 787 193 A1**
(43) Date of publication of application: **05.08.2026**
(21) Application number: 24871069.1
(22) Date of filing: 29.09.2024
(51) Int. Cl.: G06F 16/9535, G06Q 10/04

(54) **INTERACTIVE ITINERARY PLANNING METHOD AND APPARATUS, ELECTRONIC DEVICE, AND STORAGE MEDIUM**

(30) Priority: 28.09.2023 CN 202311278831
(71) Applicant: Beijing Zitiao Network Technology Co., Ltd., Beijing 100190 (CN); Lemon Inc., Grand Cayman, KY1-1205 (KY)
(72) Inventor: WANG, Mingyuan, Beijing 100028 (CN); WANG, Handong, Beijing 100028 (CN); ZHANG, Hao, Beijing 100028 (CN); HUANG, Bingbing, Beijing 100028 (CN); XIE, Junxiong, Beijing 100028 (CN)
(74) Representative: Marks & Clerk LLP
(86) International application number: PCT/CN2024/122168
(87) International publication number: WO 2025/067534

(57) **Abstract**

Embodiments of the present disclosure provide an interactive itinerary planning method and apparatus, an electronic device, and a storage medium. An embodiment comprises: in response to a first user operation, obtaining user requirements data, the user requirements data being used for representing constraints with respect to travel activities; generating a corresponding service card on an interaction interface according to the user requirements data, wherein the service card comprises at least one service item satisfying the constraints, and the service item corresponds to one activity node of a travel activity; and in response to a second user operation with respect to at least one target service item in the service card, generating recommended itinerary information corresponding to the travel activity, the recommended itinerary information at least representing an itinerary planning result for the activity node corresponding to the target service item.

## Description

The present application claims priority of the Chinese Patent Application No. 202311278831.0, filed on September 28, 2023, the disclosure of which is incorporated herein by reference in its entirety as part of the present application.

### TECHNICAL FIELD

Embodiments of the present disclosure relate to an interactive itinerary planning method and apparatus, an electronic device, and a storage medium.

### BACKGROUND

At present, people participate in various tourism and travel activities more and more frequently, and Internet platforms and Applications for such travel services also provide various related functions accordingly to meet different needs of users.

For the itinerary planning function of users in tourism and travel scenarios, keywords input by users are usually used to map to fixed itineraries pre-generated in a server, so as to obtain itinerary planning results. However, the above itinerary planning scheme has the problem that the itinerary planning results are monotonous and cannot meet the personalized travel needs of users.

### SUMMARY

Embodiments of the present disclosure provide an interactive itinerary planning method, which includes:
obtaining user requirement data in response to a first user operation, where the user requirement data is used to represent a constraint condition for a travel activity; generating a corresponding service card on an interactive interface according to the user requirement data, where the service card includes at least one service item that meets the constraint condition, and the service item corresponds to one activity node of the travel activity; and generating recommended itinerary information corresponding to the travel activity in response to a second user operation for at least one target service item in the service card, where the recommended itinerary information at least represents an itinerary planning result for an activity node corresponding to the target service item.

Embodiments of the present disclosure provide an interactive itinerary planning apparatus, which includes: an interaction module, a display module and a processing module.

The interaction module is configured to obtain user requirement data in response to a first user operation, where the user requirement data is used to represent a constraint condition for a travel activity.

The display module is configured to generate a corresponding service card on an interactive interface according to the user requirement data, where the service card includes at least one service item that meets the constraint condition, and the service item corresponds to one activity node of the travel activity.

The processing module is configured to generate recommended itinerary information corresponding to the travel activity in response to a second user operation for at least one target service item in the service card, where the recommended itinerary information at least represents an itinerary planning result for an activity node corresponding to the target service item.

Embodiments of the present disclosure provide an electronic device, which includes a processor and a memory.

The memory stores a computer-executable instruction.

The processor executes the computer-executable instruction stored in the memory, to cause the at least one processor to execute the interactive itinerary planning method of various possible designs described above.

Embodiments of the present disclosure provide a computer-readable storage medium, where a computer-executable instruction is stored in the computer-readable storage medium, and when the computer-executable instruction is executed by a processor, the processor implements the interactive itinerary planning method of various possible designs described above.

Embodiments of the present disclosure provide a computer program product, including a computer program, where when the computer program is executed by a processor, the processor implements the interactive itinerary planning method of various possible designs described above.

### BRIEF DESCRIPTION OF DRAWINGS

In order to more clearly explain the technical solutions in the embodiments of the present disclosure, the drawings required to be used in the description of the embodiments will be briefly introduced below. Obviously, the drawings in the following description are some embodiments of the present disclosure, and for those of ordinary skill in the art, other drawings may also be obtained according to these drawings without paying creative efforts.
Fig. 1 is an application scenario diagram of an interactive itinerary planning method provided by an embodiment of the present disclosure;
Fig. 2 is a flowchart schematic diagram 1 of an interactive itinerary planning method provided by an embodiment of the present disclosure;
Fig. 3 is a flowchart of a specific implementation of step S101 in the embodiment shown in Fig. 2;
Fig. 4 is a schematic diagram of a process of obtaining user requirement data provided by an embodiment of the present disclosure;
Fig. 5 is a flowchart of a specific implementation of step S1011 in the embodiment shown in Fig. 3;
Fig. 6 is a schematic diagram of a process of displaying prompt information provided by an embodiment of the present disclosure;
Fig. 7 is a schematic diagram of a service card provided by an embodiment of the present disclosure;
Fig. 8 is a schematic diagram of another service card provided by an embodiment of the present disclosure;
Fig. 9 is a flowchart schematic diagram 2 of an interactive itinerary planning method provided by an embodiment of the present disclosure;
Fig. 10 is a flowchart of a specific implementation of step S202 in the embodiment shown in Fig. 9;
Fig. 11 is a flowchart of a specific implementation of step S203 in the embodiment shown in Fig. 9;
Fig. 12 is a structural block diagram of an interactive itinerary planning apparatus provided by an embodiment of the present disclosure;
Fig. 13 is a schematic structural diagram of an electronic device provided by an embodiment of the present disclosure; and
Fig. 14 is a schematic diagram of a hardware structure of an electronic device provided by an embodiment of the present disclosure.

### DETAILED DESCRIPTION

In order to make the purpose, technical solutions and advantages of the embodiments of the present disclosure clearer, the technical solutions in the embodiments of the present disclosure will be described clearly and completely below in combination with the drawings in the embodiments of the present disclosure. Obviously, the described embodiments are part of the embodiments of the present disclosure, not all of them. Based on the embodiments in the present disclosure, all other embodiments obtained by those of ordinary skill in the art without paying creative efforts belong to the protection scope of the present disclosure.

It should be noted that the user information (including but not limited to user device information, user personal information, etc.) and data (including but not limited to data used for analysis, stored data, displayed data, etc.) involved in this disclosure are all information and data authorized by users or fully authorized by all parties, and the collection, use and processing of relevant data need to comply with relevant laws, regulations and standards of relevant countries and regions, and provide corresponding operation entry for users to choose to authorize or reject.

The application scenarios of the embodiments of the present disclosure are explained below.

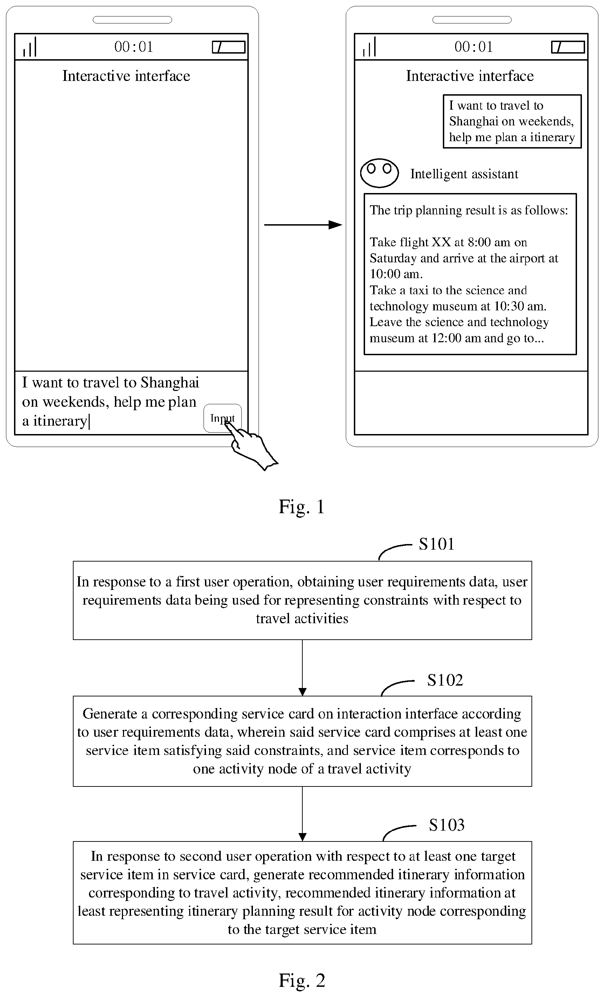

Fig. 1 is an application scenario diagram of an interactive itinerary planning method provided by an embodiment of the present disclosure. The interactive itinerary planning method provided by the embodiment of the present disclosure may be applied to an application with an intelligent assistant function, and more specifically, for example, may be applied to an application scenario of itinerary planning for a travel activity based on an intelligent assistant. The execution body of the present embodiment may be a terminal device running the above application with an intelligent assistant function, a server deploying a server side corresponding to the above application, or other electronic devices with similar functions. Referring to Fig. 1, taking a terminal device as an example, a target application, such as a tourism application, runs in the terminal device. After an intelligent assistant in the target application is invoked in response to a user operation, text content may be input on an interactive interface of the intelligent assistant by means of input method entry or voice input, so as to ask questions to the intelligent assistant, for example, inputting "I want to travel to Shanghai on weekends, please help me plan my itinerary". After that, the application processes the "text content" to generate a corresponding itinerary planning result, and for example, the itinerary planning result includes "the itinerary planning result is as follows: take flight XX at 8:00 am on Saturday and arrive at the airport at 10:00 am; take a taxi to a science and technology museum at 10:30 am; leave the science and technology museum at 12:00 am and go to..." and other content. The itinerary planning result is displayed on the interactive interface of the intelligent assistant, thereby realizing automatic itinerary planning for the travel activity scenario.

The above automatic itinerary planning for the travel activity scenario usually uses keywords input by users to map to fixed itineraries pre-generated in a server, so as to obtain itinerary planning results. For example, if the keywords input by users include "Shanghai", one or more fixed itineraries pre-generated and related to "Shanghai" are acquired, and the fixed itineraries (select one) are displayed on the interactive interface of the intelligent assistant to complete the itinerary planning process. However, the above itinerary planning scheme judges from the itinerary dimension to obtain an itinerary planning result corresponding to the keywords, and the itinerary planning itself is a pre-generated fixed itinerary, which leads to the problem that the itinerary planning result is monotonous and cannot meet the personalized travel needs of users.

An embodiment of the present disclosure provides an interactive itinerary planning method to solve the above problem.

Referring to Fig. 2, Fig. 2 is a flowchart schematic diagram 1 of an interactive itinerary planning method provided by an embodiment of the present disclosure. The method of the present embodiment may be applied to a terminal device, and the interactive itinerary planning method includes:
Step S101: obtaining user requirement data in response to a first user operation, where the user requirement data is used to represent a constraint condition for a travel activity.

Exemplarily, referring to the schematic diagram of the application scenario shown in Fig. 1, after running an application with an intelligent assistant function, the terminal device may invoke the intelligent assistant through a specified operation, and then display an interactive interface corresponding to the intelligent assistant. The above specified operation may be voice wake-up, trigger control wake-up or external button trigger wake-up of the terminal device, which is not limited here. After that, the user further operates on the above interactive interface to input information to the terminal device, for example, inputs text content through a keyboard input method, and inputs text content through a voice input method. The above operation on the interactive interface is the first user operation. Correspondingly, the terminal device responds to the first user operation, and obtains the user requirement data based on the text content input though the first user operation correspondingly. The user requirement data is used to represent a constraint condition for a travel activity. More specifically, the user requirement data includes the text content input by a user through the first user operation. For example, the text content includes "go to Shanghai on Wednesday", "travel for two people", "go to Shanghai for three days", and so on. Taking "go to Shanghai on Wednesday" as an example, the semantics it represents is the constraint condition for the travel activity, so that in the subsequent steps, a corresponding service card is generated and itinerary planning is performed for the above constraint condition, so that the final itinerary planning result is within the constraint range of the above constraint condition.

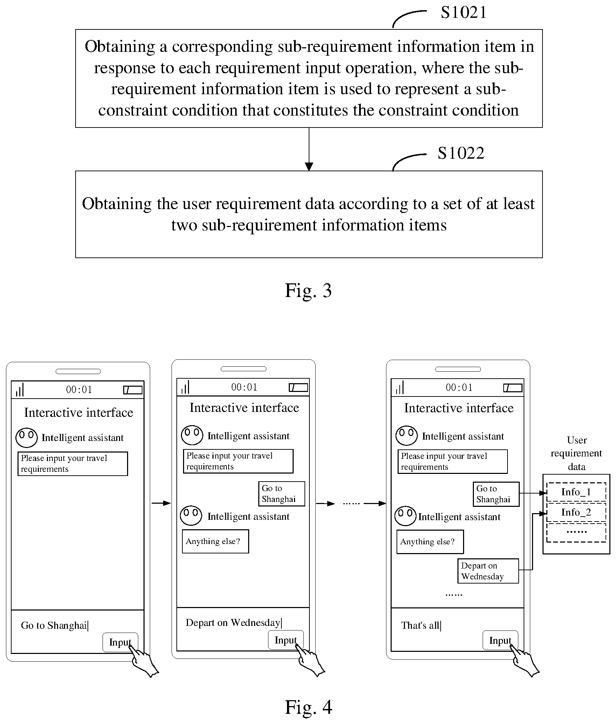

Further, in a possible implementation, the first user operation includes at least two requirement input operations, that is, the user performs at least two operations on (the interactive interface of) the terminal device, and the terminal device obtains the user requirement data through multiple rounds of conversations with the user. Correspondingly, as shown in Fig. 3, a specific implementation of step S101 includes:
Step S1011: obtaining a corresponding sub-requirement information item in response to each requirement input operation, where the sub-requirement information item is used to represent a sub-constraint condition that constitutes the constraint condition.
Step S1012: obtaining the user requirement data according to a set of at least two sub-requirement information items.

Exemplarily, the requirement input operation is an operation performed by the user on the terminal device to input information to the interactive interface (for example, the interactive interface of the intelligent assistant), and more specifically, for example, a language input operation, a keyboard input operation, and the like. At least two requirement input operations means that the user has performed at least two operations for inputting information. After that, for each requirement input operation, the terminal device may obtain a corresponding sub-requirement information item, and each sub-requirement information item represents a sub-constraint condition that constitutes the constraint condition. For example, the text representing the constraint condition is "go to Shanghai on Wednesday", correspondingly, the sub-constraint condition constituting the constraint condition includes "travel time: Wednesday" and "destination: Shanghai". Each sub-requirement information item is obtained through the requirement input operation based on the form of multiple rounds of conversations.

Fig. 4 is a schematic diagram of a process of obtaining user requirement data provided by an embodiment of the present disclosure. As shown in Fig. 4, referring to the schematic diagram of the interactive interface shown in Fig. 4, in multiple rounds of conversations with the terminal device, the user inputs text multiple times. After the prompt information "please input your travel requirements" is displayed on the interactive interface, the user inputs "go to Shanghai", which is the requirement input operation P1. Correspondingly, the terminal device obtains the sub-requirement information item Info_1 in response to the requirement input operation P1, and the represented sub-constraint condition is "destination: Shanghai". After that, the terminal device displays prompt information on the interactive interface to prompt the user to continue inputting, for example, "anything else?" After that, the user continues to input "depart on Wednesday", which is the requirement input operation P2. Correspondingly, the terminal device obtains the sub-requirement information item Info_2 in response to the requirement input operation P2, and the represented sub-constraint condition is "travel time: Wednesday". By analogy, after multiple rounds of conversations, when the user inputs keywords representing the end of the conversation, such as "that's all", the terminal device obtains the user requirement data through a set of multiple sub-requirement information items, such as the sub-requirement information item Info_1 (shown as Info_1 in the figure) and the sub-requirement information item Info_2 (shown as Info_2 in the figure).

In the steps of the present embodiment, through multiple rounds of conversations, the terminal device may obtain multiple sub-requirement information items representing sub-constraint conditions according to multiple requirement input operations of the user, and then obtain the user requirement data based on the set of the multiple sub-requirement information items, so that the user requirement data may more accurately describe the actual needs of the user. Moreover, the constraint condition represented by the user requirement data is more flexible and highly customized, so that the subsequently generated itinerary planning result may better match the actual needs of the user.

Further, in the process of the above multiple rounds of conversations to obtain the corresponding sub-requirement information item, the terminal device displays prompt information in each round of conversation (that is, before the user performs the requirement input operation), so as to guide the content input by the user next (that is, the requirement input operation), thereby obtaining more complete and accurate user requirement data.

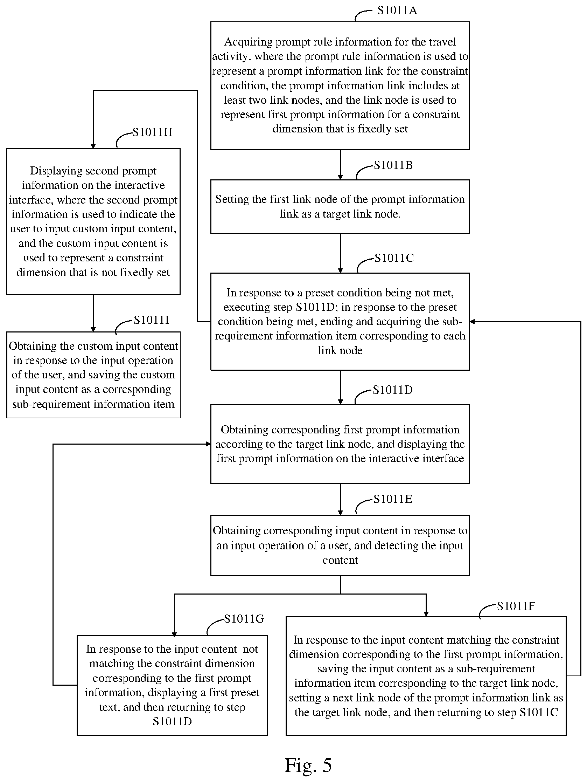

Exemplarily, as shown in Fig. 5, a specific implementation of step S1011 includes:
Step S1011A: acquiring prompt rule information for the travel activity, where the prompt rule information is used to represent a prompt information link for the constraint condition, the prompt information link includes at least two link nodes, and the link node is configured to represent first prompt information for a constraint dimension that is fixedly set.
Step S1011B: setting the first link node of the prompt information link as a target link node.
Step S1011C: in response to a preset condition being not met, executing step S1011D; in response to the preset condition being met, ending and acquiring the sub-requirement information item corresponding to each link node.
Step S1011D: obtaining corresponding first prompt information according to the target link node, and displaying the first prompt information on the interactive interface.
Step S1011E: obtaining corresponding input content in response to an input operation of a user, and detecting the input content.
Step S1011F: in response to the input content matching the constraint dimension corresponding to the first prompt information, saving the input content as a sub-requirement information item corresponding to the target link node, setting a next link node of the prompt information link as the target link node, and then returning to step S1011C.
Step S1011G: in response to the input content not matching the constraint dimension corresponding to the first prompt information, displaying a first preset text, and then returning to step S1011D.

Exemplarily, the prompt rule information is used to represent an ordered set of prompt information, that is, the prompt information link. Exemplarily, the prompt rule information corresponds to the travel activity, that is, when the types for travel activities are different, the corresponding prompt rule information may be different. For example, when the type for the travel activity is "tourism travel", it corresponds to one type of prompt rule information (for example, the prompt rule information info_1); and when the type for the travel activity is "business travel", it corresponds to another type of prompt rule information (for example, the prompt rule information info_2). Further, different prompt rule information represents prompt information links for the constraint condition, the prompt information link includes at least two link nodes, and the link node is configured to represent first prompt information for a constraint dimension that is fixedly set. Exemplarily, below is an example of a prompt information link: prompt information link List_1={addr_1, addr_2, travel_date, travel_budget, travel_count, travel_mode}. The above six link nodes addr_1, addr_2, travel_date, travel_budget, travel_count, and travel_mode sequentially represent the constraint dimensions of: the departure place, the destination place, the departure date, the expenditure budget, the number of travelers, and the travel mode. Further, the prompt information link List_1 includes six link nodes, each corresponding to first prompt information. Exemplarily, the first prompt information corresponding to the link node addr_1 is "please input your departure place"; and the first prompt information corresponding to the link node travel_date is "please input your departure date". For the prompt information link, the included link nodes are fixed, so the first prompt information represented by each link node is also fixed. That is, after the prompt rule information is determined, according to the prompt rule information, a series of first prompt information may be displayed in a fixed order and content, thereby realizing the guidance for the requirement input operation.

After that, the first link node of the prompt information link is set as the target link node, that is, starting from the first link node, the subsequent execution steps (step S1011C-step S1011F) are cyclically executed in turn, until the first prompt information corresponding to the last link node in the prompt information link is displayed, and the corresponding sub-requirement information item is obtained. In this way, the sub-requirement information item corresponding to each link node of the prompt information link is obtained, that is, the sub-requirement information item corresponding to each fixedly set constraint dimension is represented.

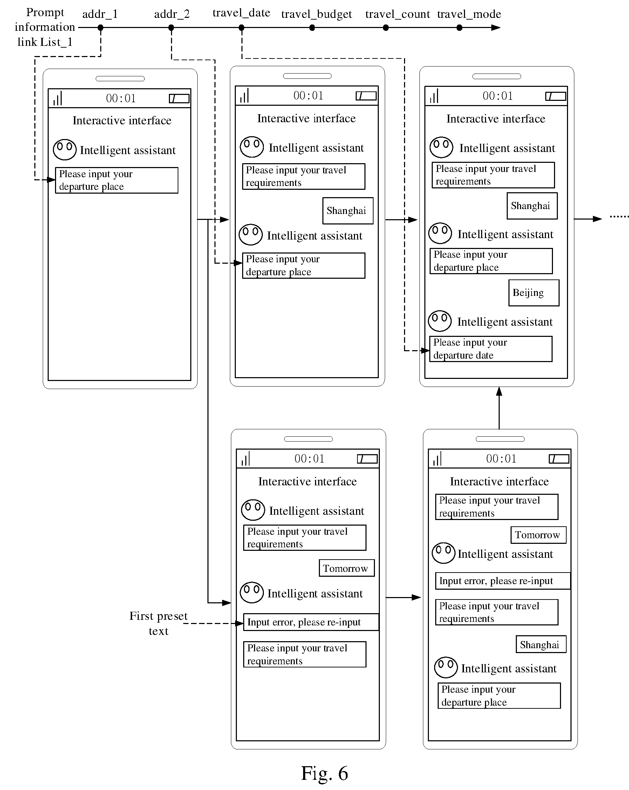

The process of obtaining the above sub-requirement information item is introduced below with a more specific embodiment. Exemplarily, Fig. 6 is a schematic diagram of a process of displaying prompt information provided by an embodiment of the present disclosure. As shown in Fig. 6, referring to the schematic diagram of the interactive interface shown in Fig. 6, after obtaining the prompt rule information info_1 corresponding to the travel activity, the terminal device generates the prompt information link List_1={addr_1, addr_2, travel_date, travel_budget, travel_count, travel_mode} represented by the prompt rule information info_1. The constraint dimensions represented in turn are: the departure place, the destination place, the departure date, the expenditure budget, the number of travelers, and the travel mode. After that, based on the above prompt information link List_1, the terminal device first displays the corresponding first prompt information "please input your departure place" on the interactive interface, starting from the first link node addr_1.

After that, in a possible implementation, the terminal device obtains the input content "Shanghai" in response to the input operation of the user, and the terminal device detects the input content. The detection result is that the input content "Shanghai" matches the constraint dimension "departure place" corresponding to the first prompt information. Exemplarily, the matching detection here may be implemented through word meaning analysis. For example, when the word meaning corresponding to the input content may be used as the constraint content under the constraint dimension (that is, the constraint content corresponding to the constraint dimension "departure place" may be "Shanghai"), the input content matches the constraint dimension. In this case, the input content "Shanghai" is saved as the sub-requirement information item corresponding to the target link node, and the sub-constraint condition represented by the sub-requirement information item is "departure place: Shanghai". After that, the next link node addr_2 of the link node addr_1 (current target link node) on the prompt information link is set as the target link node (the updated target link node), to complete the advancement of the target link node along the prompt information link. After that, returning to step S1011C, it is detected whether the preset condition is met. The preset condition includes, for example, the target link node being empty or not present, that is, the updated target link node has exceeded the prompt information link (that is, the target link node before the updating is the last link node of the prompt information link), then the preset condition is met. At this time, the loop is jumped out and the sub-requirement information item corresponding to each link node is obtained (certainly, the preset condition may also be implemented in other ways, for example, the number of the above loops is greater than a preset value, which may be set according to requirements and will not be repeated one by one). In response to the preset condition being not met, the above steps are continued to be repeated. In the present embodiment, the updated target link node addr_2 is not empty, so the preset condition is not met, and the above steps are continued to be repeated, and the first prompt information such as "please input your departure place", "please input your departure date", and "please input your expenditure budget" is displayed on the interactive interface in turn. Correspondingly, taking the target link node addr_2 as an example, after the terminal device displays "please input your departure place" on the interactive interface, the terminal device obtains the input content "Beijing" in response to the input operation of the user, and while displaying the input content "Beijing", repeats the above steps of performing matching detection on the input content, which will not be repeated.

In another possible implementation, the terminal device obtains the input content "tomorrow" in response to the input operation of the user, and the terminal device detects the input content. The detection result is that the input content "tomorrow" does not match the constraint dimension "departure place" corresponding to the first prompt information. In this case, the terminal device displays a first preset text, such as "input error, please re-input". The matching detection method has been introduced in detail in the previous steps and will not be repeated here. After that, after displaying the first preset text on the interactive interface, the terminal device returns to step S1011D, re-displays the first prompt information "please input your departure place" on the interactive interface, and repeats the above steps until the user inputs the correct content, such as "Shanghai".

In the steps of this embodiment, the terminal device sequentially and orderly displays multiple pieces of first prompt information through the prompt information link corresponding to the travel activity, so as to guide the user to input corresponding content based on the constraint dimension represented by the first prompt information, and then obtain the sub-requirement information item representing the corresponding sub-constraint condition under a specific constraint dimension, so that the finally generated user requirement data may fully reflect the user requirement and meet the needs of subsequent itinerary planning. Further, in the application scenario of itinerary planning for the travel activity, since the process of itinerary planning is automatically completed by a server or a terminal device based on a program and a model, the user does not fully know what specific content is required for the user requirement data that needs to be provided. For example, the user usually does not input the limit condition of "expenditure budget" without prompt information. Therefore, by using the preset prompt information link to prompt and guide the user, the user may be enabled to input requirements in multiple dimensions, so that the final itinerary planning result has a higher degree of matching with the user requirements.

Further, after obtaining a sub-requirement information item corresponding to each link node of the prompt information link, that is, after meeting the preset condition and ending the loop, the method further includes:

Step S1011H: displaying second prompt information on the interactive interface, where the second prompt information is used to indicate the user to input custom input content, and the custom input content is used to represent a constraint dimension that is not fixedly set.

Step S1011I: obtaining the custom input content in response to the input operation of the user, and saving the custom input content as a corresponding sub-requirement information item.

Exemplarily, the second prompt information is information used to indicate the user to input the custom input content, for example, "do you have any other requirements?" Thus, the user is guided to input the custom input content that represents the user requirement under the constraint dimension that is not fixedly set, for example, "go climbing if it does not rain". After that, the terminal device semantically understands the custom input content and saves it as a corresponding sub-requirement information item, thereby realizing the supplement to the sub-constraint condition under the fixedly set constraint dimension, further improving the flexibility and diversity of the finally generated itinerary planning result, and meeting the personalized needs of the user.

Step S102: generating a corresponding service card on an interactive interface according to the user requirement data, where the service card includes at least one service item that meets the constraint condition, and the service item corresponds to one activity node of the travel activity.

Step S103: generating recommended itinerary information corresponding to the travel activity in response to a second user operation for at least one target service item in the service card, where the recommended itinerary information at least represents an itinerary planning result for an activity node corresponding to the target service item.

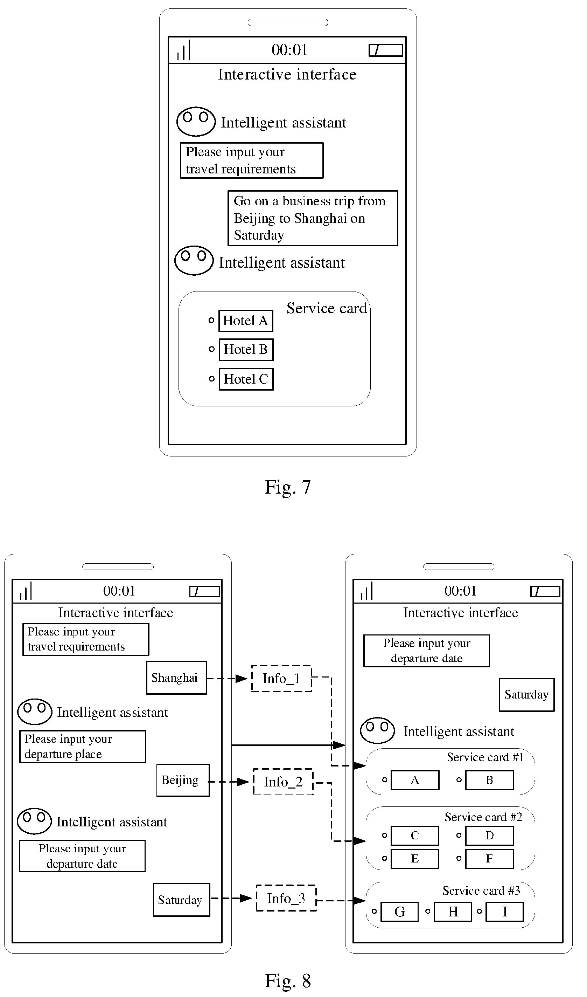

Exemplarily, after obtaining the user requirement data, a service card is further generated on the interactive interface according to the user requirement data. Exemplarily, the service card may be implemented through a control that is set in an application, the service card includes at least one service item that meets the above constraint condition, and the service item corresponds to an activity node, where the activity node is, for example, a specific place or activity content item in the travel activity. Fig. 7 is a schematic diagram of a service card provided by an embodiment of the present disclosure. As shown in Fig. 7, after the user inputs the text content "go on a business trip from Beijing to Shanghai on Saturday" on the interactive interface of the intelligent assistant, the terminal device generates the corresponding user requirement data, and displays the service card on the interactive interface based on the user requirement data. The service card includes several service items, such as "A hotel", "B hotel" and "C hotel" shown in the figure. The above service items represent activity nodes that meet the constraint condition corresponding to the user requirement data, that is, the above "A hotel", "B hotel" and "C hotel" are located in "Shanghai" (a sub-constraint condition) and may be booked on "this Saturday" (a sub-constraint condition).

Exemplarily, the service card has a first card appearance, and the first card appearance is determined based on the constraint condition corresponding to the user requirement data. For example, when the constraint condition corresponding to the user requirement data includes "destination: Shanghai", then the first card appearance of the service card is an appearance related to the city of "Shanghai", for example, the card appearance of the service card includes a map of a city landmark building of "Shanghai". Further, exemplarily, each service item is in a selectable state. After the service card is displayed on the interactive interface of the terminal device, the user selects at least one target service item in the service card (performs a second user operation). After the terminal device responds to the second user operation, the target service item is set to the selected state. After that, the terminal device performs itinerary planning based on the target service item in a selected state, thereby generating recommended itinerary information that represents an itinerary planning result, where the itinerary planning result represented by the recommended itinerary information includes at least the activity nodes corresponding to the selected target service item, such as "A hotel" and "B hotel" in the above example. On this basis, other activity nodes may also be included in the itinerary planning result based on the user requirement information, which will not be repeated here.

Further, when the user requirement data is generated based on multiple rounds of conversations, the service card may be generated based on the sub-requirement information item that constitutes the user requirement data. Fig. 8 is a schematic diagram of another service card provided by an embodiment of the present disclosure. Exemplarily, after multiple rounds of conversations in the embodiment shown in Fig. 6, the terminal device respectively obtains sub-requirement information items corresponding to multiple sub-constraint conditions, such as the sub-requirement information item Info_1, the sub-requirement information item Info_2 and the sub-requirement information item Info_3 (respectively shown as Info_1, Info_2 and Info_3 in the figure) shown in the figure. Exemplarily, the sub-constraint condition represented by the sub-requirement information item Info_1 is "departure place: Beijing", the sub-constraint condition represented by the sub-requirement information item Info_2 is "destination place: Shanghai", and the sub-constraint condition represented by the sub-requirement information item Info_3 is " departure date: Saturday". After that, the terminal device respectively generates the service card #1, the service card #2 and the service card #3 according to the above multiple sub-requirement information items obtained based on multiple rounds of interactions. The service items (shown as A to I in the figure) in the above service card #1, service card #2 and service card #3 respectively meet the sub-constraint conditions corresponding to the sub-requirement information item Info_1, sub-requirement information item Info_2 and sub-requirement information item Info_3 corresponding to the service card in which they are located. After that, based on the second user operation of the user for the above multiple service cards, the activity node corresponding to each sub-constraint condition is obtained, thereby obtaining a more accurate itinerary planning result with a higher degree of requirement matching.

In the application scenario of travel activity planning, since the user requirement is usually broad constraint information, such as travel time, travel purpose, travel mode, etc., a very large number of itinerary planning results may be obtained by directly performing itinerary planning based on the above broad constraint information, which will lead to the problem that the itinerary planning result is difficult to accurately meet the user requirement. In the present embodiment, however, the obtained user requirement data is further converted into a service card for display, and combined with a further operation of the user, a precise activity node is obtained, and then precise itinerary planning is realized, so that the finally generated itinerary planning result may be more in line with the actual needs of the user.

In an embodiment of the present disclosure, user requirement data is obtained in response to a first user operation, where the user requirement data is used to represent a constraint condition for a travel activity; a corresponding service card is generated on an interactive interface according to the user requirement data, where the service card includes at least one service item that meets the constraint condition, and the service item corresponds to one activity node of the travel activity; and recommended itinerary information corresponding to the travel activity is generated in response to a second user operation for at least one target service item in the service card, the recommended itinerary information at least represents an itinerary planning result for an activity node corresponding to the target service item. By using the user requirement data to generate the service card on the interactive interface and then generating the recommended itinerary information in response to the user operation on the service card, the purpose of accurately acquiring the activity node that meets the user requirement may be realized through the above multiple rounds of interaction processes, so that the itinerary planning result generated based on the above activity node may match the personalized requirement of the user to the maximum extent, and the diversification and personalization degree of the itinerary planning result may be improved.

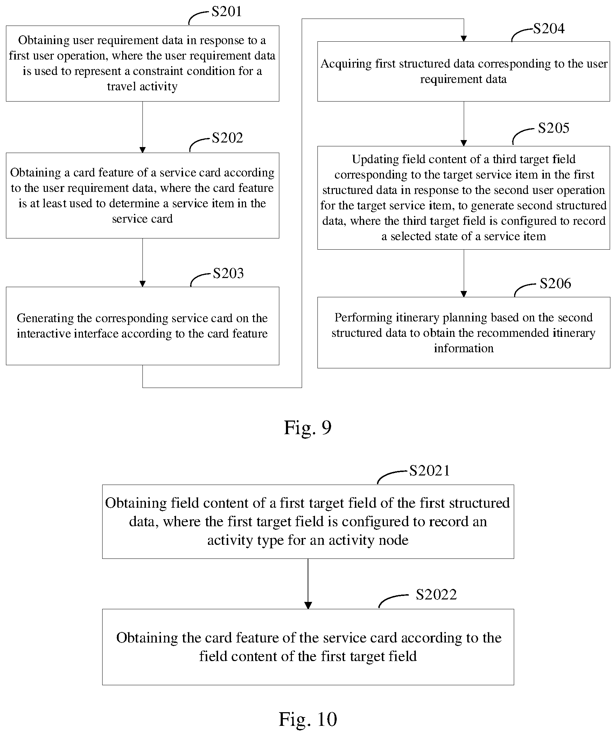

Referring to Fig. 9, Fig. 9 is a flowchart schematic diagram 2 of an interactive itinerary planning method provided by an embodiment of the present disclosure. In the present embodiment, step S102 is further detailed on the basis of the embodiment shown in Fig. 2, and the interactive itinerary planning method includes:
Step S201: obtaining user requirement data in response to a first user operation, where the user requirement data is used to represent a constraint condition for a travel activity.
Step S202: obtaining a card feature of a service card according to the user requirement data, where the card feature is at least used to determine a service item in the service card.
Step S203: generating the corresponding service card on the interactive interface according to the card feature.

Exemplarily, after obtaining the user requirement data, it may be mapped to a corresponding card feature through the constraint condition represented by the user requirement data, where the card feature may be represented by a feature identification, or may be represented by a higher-dimensional feature vector and feature matrix, which is not limited here. Through the card feature, the service item in the corresponding service card may be obtained. In a possible implementation, the card feature includes a card identification, a corresponding service card identification is obtained based on the card identification, and then a corresponding service card with a fixed service item is obtained based on the service card identification. In another possible implementation, the card feature includes a feature matrix and a feature vector corresponding to the constraint condition. A corresponding target service item is determined based on the card feature, and then a corresponding service card is obtained based on the target service item.

Exemplarily, the user requirement data includes first structured data representing the constraint condition. As shown in Fig. 10, a specific implementation of step S202 includes:
Step S2021: obtaining field content of a first target field of the first structured data, where the first target field is configured to record an activity type for an activity node.
Step S2022: obtaining the card feature of the service card according to the field content of the first target field.

Exemplarily, the structured data refers to data with specific data fields (a specific data structure), and the user requirement data may be implemented through the first structured data. That is, a specific field in the first structured data is configured to represent the constraint condition. In a possible implementation, after the user requirement data is obtained based on the first structured data, by reading a specific data field in the first structured data, for example, acquiring the field content of the first target field, the information representing the activity type for the activity node is obtained. The activity type includes, for example, "meal", "accommodation", "travel", "scenic spot", and the like. Through the activity type, a general classification of activity nodes may be realized. For example, the field content of the first target field is #1, representing that the activity type is "meal", and further, under the activity type, there are multiple corresponding service items, such as "A restaurant", "B restaurant", "C snack street", and so on. Therefore, through the field content #1, service item identifications corresponding to multiple service items may be obtained, and then a card feature is generated based on a set of multiple service item identifications; or, the field content of the first target field is #1, which is directly used as a card feature. The card feature obtained in the above two ways may be used to determine the service item in the service card.

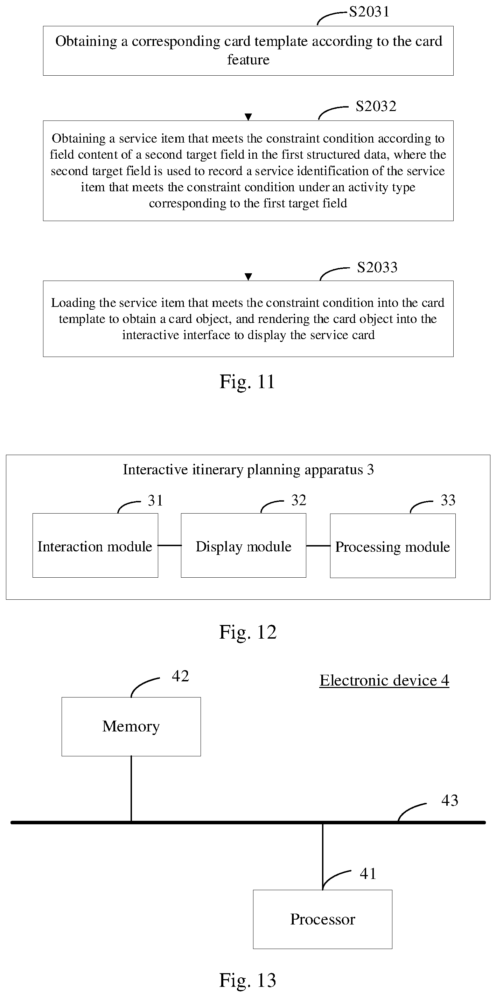

Further, as shown in Fig. 11, a specific implementation of step S203 includes:
Step S2031: obtaining a corresponding card template according to the card feature.
Step S2032: obtaining a service item that meets the constraint condition according to field content of a second target field in the first structured data, where the second target field is configured to record a service identification of the service item that meets the constraint condition under an activity type corresponding to the first target field.
Step S2033: loading the service item that meets the constraint condition into the card template to obtain a card object, and rendering the card object into the interactive interface to display the service card.

Exemplarily, after the card feature is determined, it may be mapped to a corresponding card template based on the card feature. Exemplarily, the card template is used to determine the appearance of the service card and the organization form of service items in the service card, such as the position and spacing of the service items. The mapping relationship between the card feature and the card template may be preset, which will not be repeated here. After that, the field content of the second target field in the first structured data is obtained, where the second target field is configured to record the service identification of the service item that meets the constraint condition under the activity type corresponding to a target field. For example, when the activity type corresponding to the first target field is "accommodation", then the second target field in the first structured data records service items that meet the constraint condition corresponding to the user requirement data under the above activity type of "accommodation", such as "A hotel", "B hotel", and so on. After that, the above service items that meet the constraint condition are loaded into the card template to initialize the card object, and then the card object is rendered into the interactive interface, which may realize the purpose of displaying the service card including the above service items. The card template may be created in the way of a template object, and then the loading method of the card template is called to realize the loading of the service items, thereby obtaining the card object. After that, calling the drawing method of the operating system to realize the screen rendering of the card object is a technique known to those skilled in the art, which will not be repeated here.

Step S204: acquiring first structured data corresponding to the user requirement data.

Step S205: updating field content of a third target field corresponding to the target service item in the first structured data in response to the second user operation for the target service item, to generate second structured data, where the third target field is configured to record a selected state of a service item.

Step S206: performing itinerary planning based on the second structured data to obtain the recommended itinerary information.

Further, exemplarily, the terminal device receives the second user operation for the service card, which may be a selection operation for the target service item in the service card. Since the second user operation may include a selection operation for multiple service items, after the terminal device displays the service card, in response to the selection operation by the user for multiple target service items, the terminal device marks the target service items as the selected state, and after the selection operation ends (after the second user operation is completed), all service items (target service items) in the selected state are planned, thereby obtaining the recommended itinerary information.

Specifically, the target service item is recorded in the first structured data corresponding to the user requirement data, and more specifically, a third field of the first structured data may represent the selected state of each target service item. After responding to the second user operation for the target service item, the terminal device modifies the field content of the third target field corresponding to the target service item in the first structured data. For example, in the unselected state, the field content of the third target field is "0"; and when the selected state is processed in response to the second user operation, the field content of the third target field is set to "1". After the first structured data is updated, the obtained structured data is the second structured data.

After that, the second structured data is used. Specifically, the selected state of the service item indicated by the third target field in the second structured data is referred to, to determine the target service item, and then itinerary planning is performed based on the activity node, such as "A hotel", "B commercial center" and "C airport", represented by the target service item. After multiple places are determined, the time itinerary planning may be implemented by a large model deployed in a server and externally connected to traffic information, and the specific implementation process will not be repeated. In the present embodiment, the user requirement data obtained based on the user input is structurally transformed to generate the first structured data, and on the basis of the first structured data, the subsequent user operation is mapped into the first structured data, and the first structured data is changed to record more detailed and accurate user requirements, thereby improving the efficiency of the finally obtained recommended itinerary information. Especially when the itinerary planning step is executed through the large model deployed in the service, the calculation load of the server may be effectively reduced, and the utilization rate of calculation resources and network resources may be improved.

In this embodiment, the implementation of step S201 is the same as the implementation of step S101 in the embodiment shown in Fig. 2 of the present disclosure, which will not be repeated here.

Corresponding to the interactive itinerary planning method of the above embodiments, Fig. 12 is a structural block diagram of an interactive itinerary planning apparatus provided by an embodiment of the present disclosure. For convenience of explanation, only parts related to the embodiments of the present disclosure are shown. Referring to Fig. 12, the interactive itinerary planning apparatus 3 includes: an interaction module 31, a display module 32 and a processing module 33.

The interaction module 31 is configured to obtain user requirement data in response to a first user operation, where the user requirement data is used to represent a constraint condition for a travel activity.

The display module 32 is configured to generate a corresponding service card on an interactive interface according to the user requirement data, where the service card includes at least one service item that meets the constraint condition, and the service item corresponds to one activity node of the travel activity.

The processing module 33 is configured to generate recommended itinerary information corresponding to the travel activity in response to a second user operation for at least one target service item in the service card, where the recommended itinerary information at least represents an itinerary planning result for an activity node corresponding to the target service item.

In an embodiment of the present disclosure, the service card has a first card appearance, and the first card appearance is determined based on the constraint condition corresponding to the user requirement data.

In an embodiment of the present disclosure, the display module 32 is further configured to: obtain a card feature of the service card according to the user requirement data, where the card feature is at least used to determine a service item in the service card; and generate the corresponding service card on the interactive interface according to the card feature.

In an embodiment of the present disclosure, the user requirement data includes first structured data representing the constraint condition; and the display module 32, when obtaining the card feature of the service card according to the user requirement data, is further configured to: obtain field content of a first target field of the first structured data, where the first target field is configured to record an activity type for an activity node; and obtain the card feature of the service card according to the field content of the first target field.

In an embodiment of the present disclosure, the display module 32, when generating the corresponding service card on the interactive interface according to the card feature, is further configured to: obtain a corresponding card template according to the card feature; obtain a service item that meets the constraint condition according to field content of a second target field in the first structured data, where the second target field is configured to record a service identification of the service item that meets the constraint condition under an activity type corresponding to the first target field; and load the service item that meets the constraint condition into the card template to obtain a card object, and render the card object into the interactive interface to display the service card.

In an embodiment of the present disclosure, the first user operation includes at least two requirement input operations, and the interaction module 31 is further configured to: obtain corresponding sub-requirement information item in response to each requirement input operation, where the sub-requirement information item is used to represent a sub-constraint condition that constitutes the constraint condition; and obtain the user requirement data according to a set of at least two sub-requirement information items.

In an embodiment of the present disclosure, the interaction module 31, when obtaining a corresponding sub-requirement information item in response to each requirement input operation, is further configured to: acquire prompt rule information for the travel activity, where the prompt rule information is used to represent a prompt information link for the constraint condition, the prompt information link includes at least two link nodes, and the link node is configured to represent first prompt information for a constraint dimension that is fixedly set; and set a first link node of the prompt information link as a target link node, and cyclically execute following steps until a preset condition is met: obtaining corresponding first prompt information according to the target link node, and displaying the first prompt information on the interactive interface; obtaining corresponding input content in response to an input operation of a user, and detecting the input content; in response to the input content matching the constraint dimension corresponding to the first prompt information, saving the input content as a sub-requirement information item corresponding to the target link node, and setting a next link node of the prompt information link as the target link node; in response to the input content not matching the constraint dimension corresponding to the first prompt information, displaying a first preset text; where the preset condition includes the target link node being empty or not present.

In an embodiment of the present disclosure, the interaction module 31 is further configured to: after obtaining a sub-requirement information item corresponding to each link node of the prompt information link, display second prompt information on the interactive interface, where the second prompt information is used to indicate the user to input custom input content, and the custom input content is used to represent a constraint dimension that is not fixedly set; and obtain the custom input content in response to the input operation of the user, and save the custom input content as a corresponding sub-requirement information item.

In an embodiment of the present disclosure, the processing module 33 is specifically configured to: acquire first structured data corresponding to the user requirement data; and update field content of a third target field corresponding to the target service item in the first structured data in response to the second user operation for the target service item, to generate second structured data, where the third target field is configured to record a selected state of a service item; and perform itinerary planning based on the second structured data to obtain the recommended itinerary information.

The interaction module 31, the display module 32, and the processing module 33 are connected in turn. The interactive itinerary planning apparatus 3 provided by the present embodiment may execute the technical solutions of the above method embodiments, and the implementation principles and technical effects thereof are similar, which will not be repeated here in this embodiment.

Fig. 13 is a schematic structural diagram of an electronic device provided by an embodiment of the present disclosure. As shown in Fig. 13, the electronic device 4 includes:
a processor 41, and a memory 42 communicatively connected to the processor 41.

The memory 42 stores computer-executable instructions.

The processor 41 executes the computer-executable instructions stored in the memory 42 to implement the interactive itinerary planning method in the embodiments shown in Fig. 2 to Fig. 11.

Optionally, the processor 41 and the memory 42 are connected through a bus 43.

The relevant descriptions may be understood by referring to the relevant descriptions and effects corresponding to the steps in the embodiments corresponding to Fig. 2 to Fig. 11, which will not be repeated here.

An embodiment of the present disclosure provides a computer-readable storage medium, in which a computer-executable instruction is stored, and the computer-executable instruction, when executed by a processor, is used to implement the interactive itinerary planning method provided by any of the embodiments corresponding to Fig. 2 to Fig. 11 of the present disclosure.

In order to implement the above embodiments, an embodiment of the present disclosure further provides an electronic device.

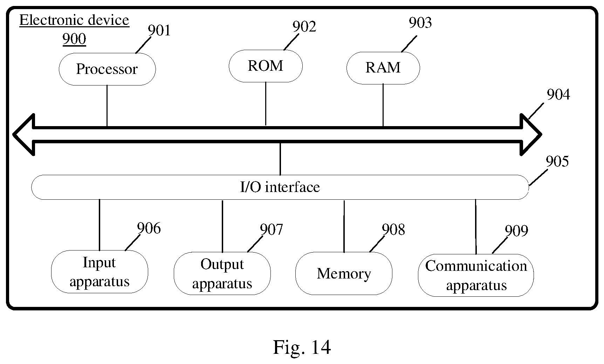

Referring to Fig. 14, it shows a schematic structural diagram of an electronic device 900 suitable for implementing an embodiment of the present disclosure, and the electronic device 900 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (such as a vehicle navigation terminal), etc., and fixed terminals such as a digital TV, a desktop computer, etc. The electronic device shown in Fig. 14 is only an example, and should not bring any limitation to the function and scope of use of the embodiments of the present disclosure.

As shown in Fig. 14, the electronic device 900 may include a processor 901 (such as a central processing unit, a graphics processor, etc.), which may perform various appropriate actions and processes according to a program stored in a read-only memory (abbreviated as ROM) 902 or a program loaded from a memory 908 into a random access memory (abbreviated as RAM) 903. In the RAM 903, various programs and data required for the operation of the electronic device 900 are also stored. The processor 901, the ROM 902 and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touch pad, a keyboard, a mouse, a camera, a microphone, an accelerometer, a gyroscope, etc.; an output apparatus 907 including, for example, a liquid crystal display (abbreviated as LCD), a speaker, a vibrator, etc.; a memory 908 including, for example, a magnetic tape, a hard disk, etc.; and a communication apparatus 909. The communication apparatus 909 may allow the electronic device 900 to perform wireless or wired communication with other devices to exchange data. Although Fig. 14 shows the electronic device 900 with various apparatuses, it should be understood that it is not required to implement or have all the apparatuses shown. Alternatively, more or fewer apparatuses may be implemented or provided.

In particular, according to an embodiment of the present disclosure, the process described above with reference to the flowchart may be implemented as a computer software program. For example, an embodiment of the present disclosure includes a computer program product, which includes a computer program carried on a computer-readable medium, the computer program including program code for executing the method shown in the flowchart. In such an embodiment, the computer program may be downloaded and installed from a network through the communication apparatus 909, or installed from the memory 908, or installed from the ROM 902. When the computer program is executed by the processor 901, the above functions defined in the method of the embodiment of the present disclosure are executed.

It should be noted that the above computer-readable medium in the present disclosure may be a computer-readable signal medium or a computer-readable storage medium or any combination of the two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that includes or stores a program, and the program may be used by or in combination with an instruction execution system, apparatus or device. In the present disclosure, the computer-readable signal medium may include a data signal propagated in a baseband or as a part of a carrier wave, and computer-readable program code is carried therein. The data signal propagated in this way may take various forms, including but not limited to an electromagnetic signal, an optical signal or any suitable combination of the above. The computer-readable signal medium may also be any computer-readable medium other than the computer-readable storage medium, and the computer-readable signal medium may send, propagate or transmit the program used by or in combination with the instruction execution system, apparatus or device. The program code included on the computer-readable medium may be transmitted by any suitable medium, including but not limited to: a wire, an optical cable, a radio frequency (RF), etc., or any suitable combination of the above.

The above computer-readable medium may be included in the above electronic device; or it may exist alone without being assembled into the electronic device.

The above computer-readable medium carries one or more programs, which, when executed by the electronic device, causes the electronic device to perform the method shown in the above embodiment.

The computer program code for performing the operations of the present disclosure may be written in one or more programming languages or a combination thereof. The above programming languages include object-oriented programming languages such as Java, Smalltalk, C++, and also conventional procedural programming languages such as "C" language or similar programming languages. The program code may be executed entirely on a user's computer, partly on a user's computer, as a stand-alone software package, partly on a user's computer and partly on a remote computer, or entirely on a remote computer or a server. In the case of involving a remote computer, the remote computer may be connected to a user's computer through any kind of network, including a local area network (abbreviated as LAN) or a wide area network (abbreviated as WAN), or it may be connected to an external computer (for example, connected by using Internet provided by an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, which includes one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by means of software or by means of hardware. Among them, the name of a unit does not constitute a limitation on the unit itself under certain circumstances. For example, the first acquisition unit may also be described as "a unit for acquiring at least two internet protocol addresses".

The functions described above herein may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium would include an electrical connection based on one or more lines, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

According to one or more embodiments of the present disclosure, an interactive itinerary planning method is provided, and includes:

obtaining user requirement data in response to a first user operation, where the user requirement data is used to represent a constraint condition for a travel activity; generating a corresponding service card on an interactive interface according to the user requirement data, where the service card includes at least one service item that meets the constraint condition, and the service item corresponds to one activity node of the travel activity; and generating a recommended trip information item corresponding to the travel activity in response to a second user operation for at least one target service item in the service card, the recommended trip information at least represents an itinerary planning result for an activity node corresponding to the target service item.

According to one or more embodiments of the present disclosure, the service card has a first card appearance, and the first card appearance is determined based on the constraint condition corresponding to the user requirement data.

According to one or more embodiments of the present disclosure, the generating a corresponding service card on an interactive interface according to the user requirement data, includes: obtaining a card feature of the service card according to the user requirement data, where the card feature is at least used to determine a service item in the service card; and generating the corresponding service card on the interactive interface according to the card feature.

According to one or more embodiments of the present disclosure, the user requirement data includes first structured data representing the constraint condition; and the obtaining the card feature of the service card according to the user requirement data, includes: obtaining field content of a first target field of the first structured data, where the first target field is configured to record an activity type for an activity node; and obtaining the card feature of the service card according to the field content of the first target field.

According to one or more embodiments of the present disclosure, the generating the corresponding service card on the interactive interface according to the card feature includes: obtaining a corresponding card template according to the card feature; obtaining a service item that meets the constraint condition according to field content of a second target field in the first structured data, where the second target field is configured to record a service identification of the service item that meets the constraint condition under an activity type corresponding to the first target field; and loading the service item that meets the constraint condition into the card template to obtain a card object, and rendering the card object into the interactive interface to display the service card.

According to one or more embodiments of the present disclosure, the first user operation includes at least two requirement input operations, and the obtaining the user requirement data in response to the first user operation includes: obtaining a corresponding sub-requirement information item in response to each requirement input operation, the sub-requirement information item is used to represent a sub-constraint condition that constitutes the constraint condition; and obtaining the user requirement data according to a set of at least two sub-requirement information items.

According to one or more embodiments of the present disclosure, the obtaining a corresponding sub-requirement information item in response to each requirement input operation, includes: acquiring prompt rule information for the travel activity, where the prompt rule information is used to represent a prompt information link for the constraint condition, the prompt information link includes at least two link nodes, and the link node is configured to represent first prompt information for a constraint dimension that is fixedly set; and setting a first link node of the prompt information link as a target link node, and cyclically performing following steps until a preset condition is met: obtaining corresponding first prompt information according to the target link node, and displaying the first prompt information on the interactive interface; obtaining corresponding input content in response to an input operation of the user, and detecting the input content; in response to the input content matching the constraint dimension corresponding to the first prompt information, saving the input content as a sub-requirement information item corresponding to the target link node, and setting a next link node of the prompt information link as the target link node; in response to the input content not matching the constraint dimension corresponding to the first prompt information, displaying a first preset text; where the preset condition includes the target link node being empty or not present.

According to one or more embodiments of the present disclosure, the method further includes: after obtaining a sub-requirement information item corresponding to each link node of the prompt information link, displaying second prompt information on the interactive interface, where the second prompt information is used to indicate the user to input custom input content, and the custom input content represents a constraint dimension that is not fixedly set; and obtaining the custom input content in response to an input operation of the user, and saving the custom input content as a corresponding sub-requirement information item.

According to one or more embodiments of the present disclosure, the generating recommended itinerary information corresponding to the travel activity in response to a second user operation for at least one target service item in the service card, includes: acquiring first structured data corresponding to the user requirement data; and updating field content of a third target field corresponding to the target service item in the first structured data in response to the second user operation for the target service item, to generate second structured data, where the third target field is configured to record a selected state of a service item; and performing itinerary planning based on the second structured data to obtain the recommended itinerary information.

According to one or more embodiments of the present disclosure, an interactive itinerary planning apparatus is provided and includes: an interaction module, a display module and a processing module.

The interaction module is configured to obtain user requirement data in response to a first user operation, where the user requirement data is used to represent a constraint condition for a travel activity.

The display module is configured to generate a corresponding service card on an interactive interface according to the user requirement data, where the service card includes at least one service item that meets the constraint condition, and the service item corresponds to one activity node of the travel activity.

The processing module is configured to generate recommended itinerary information corresponding to the travel activity in response to a second user operation for at least one target service item in the service card, where the recommended itinerary information at least represents an itinerary planning result for an activity node corresponding to the target service item.

According to one or more embodiments of the present disclosure, the service card has a first card appearance, and the first card appearance is determined based on the constraint condition corresponding to the user requirement data.

According to one or more embodiments of the present disclosure, the display module is further configured to: obtain a card feature of the service card according to the user requirement data, the card feature being at least used to determine a service item in the service card; and generate the corresponding service card on the interactive interface according to the card feature.

According to one or more embodiments of the present disclosure, the user requirement data includes first structured data representing the constraint condition; and the display module, when obtaining the card feature of the service card according to the user requirement data, is further configured to: obtain field content of a first target field of the first structured data, where the first target field is configured to record an activity type for an activity node; and obtain the card feature of the service card according to the field content of the first target field.

According to one or more embodiments of the present disclosure, the display module, when generating the corresponding service card on the interactive interface according to the card feature, is further configured to: obtain a corresponding card template according to the card feature; obtain a service item that meets the constraint condition according to field content of a second target field in the first structured data, where the second target field is configured to record a service identification of the service item that meets the constraint condition under an activity type corresponding to the first target field; and load the service item that meets the constraint condition into the card template to obtain a card object, and render the card object into the interactive interface to display the service card.

According to one or more embodiments of the present disclosure, the first user operation includes at least two requirement input operations, and the interaction module is further configured to: obtain a corresponding sub-requirement information item in response to each requirement input operation, where the sub-requirement information item represents a sub-constraint condition that constitutes the constraint condition; and obtain the user requirement data according to a set of at least two sub-requirement information items.

According to one or more embodiments of the present disclosure, the interaction module, when obtaining a corresponding sub-requirement information item in response to each requirement input operation, is further configured to: acquire prompt rule information for the travel activity, where the prompt rule information represents a prompt information link for the constraint condition, the prompt information link includes at least two link nodes, and the link node represents first prompt information for a constraint dimension that is fixedly set; and set a first link node of the prompt information link as a target link node, and cyclically executing the following steps until a preset condition is met: obtaining corresponding first prompt information according to the target link node, and displaying the first prompt information on the interactive interface; obtaining corresponding input content in response to an input operation of the user, and detecting the input content; in response to the input content matching the constraint dimension corresponding to the first prompt information, saving the input content as a sub-requirement information item corresponding to the target link node, and setting a next link node of the prompt information link as the target link node; in response to the input content not matching the constraint dimension corresponding to the first prompt information, displaying a first preset text; where the preset condition includes the target link node being empty or not present.

According to one or more embodiments of the present disclosure, the interaction module is further configured to: after obtaining a sub-requirement information item corresponding to each link node of the prompt information link, display second prompt information on the interactive interface, where the second prompt information is used to indicate the user to input custom input content, and the custom input content is used to represent a constraint dimension that is not fixedly set; and obtain the custom input content in response to the input operation of the user, and save the custom input content as corresponding sub-requirement information item.

According to one or more embodiments of the present disclosure, the processing module is further configured to: acquire first structured data corresponding to the user requirement data; and update field content of a third target field corresponding to the target service item in the first structured data in response to the second user operation for the target service item, to generate second structured data, where the third target field is configured to record a selected state of a service item; and perform itinerary planning based on the second structured data to obtain the recommended itinerary information.

According to one or more embodiments of the present disclosure, an electronic device is provided, and includes at least one processor and a memory.

The memory stores a computer-executable instruction.

The at least one processor executes the computer-executable instruction stored in the memory, to cause the at least one processor to execute the interactive itinerary planning method described in one or more of the above embodiments.

According to one or more embodiments of the present disclosure, a computer-readable storage medium is provided, where a computer-executable instruction is stored in the computer-readable storage medium, and when the computer-executable instruction is executed by a processor, the interactive itinerary planning method described in one or more of the above embodiments is implemented.

According to one or more embodiments of the present disclosure, a computer program product is provided, and includes a computer program, where when the computer program is executed by a processor, the interactive itinerary planning method described in one or more of the above embodiments is implemented.

The above description is only a preferred embodiment of the present disclosure and an illustration of the applied technical principles. Those skilled in the art should understand that the disclosure scope involved in the present disclosure is not limited to the technical solutions formed by the specific combination of the above technical features, but also covers other technical solutions formed by the arbitrary combination of the above technical features or their equivalent features without departing from the above disclosure concept. For example, a technical solution formed by replacing the above features with technical features with similar functions disclosed in the present disclosure (but not limited to).

In addition, although the operations are depicted in a particular order, this should not be understood as requiring the operations to be performed in the particular order shown or in a sequential order. Under certain circumstances, multitasking and parallel processing may be beneficial. Likewise, although the above discussion includes several specific implementation details, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or method logic actions, it should be understood that the subject matter defined in the appended claims is not necessarily limited to the specific features or actions described above. On the contrary, the specific features and actions described above are only example forms for implementing the claims.

## Claims

1. An interactive itinerary planning method, comprising:
obtaining user requirement data in response to a first user operation, wherein the user requirement data is used to represent a constraint condition for a travel activity;
generating a corresponding service card on an interactive interface according to the user requirement data, wherein the service card comprises at least one service item that meets the constraint condition, and the service item corresponds to one activity node of the travel activity; and
generating recommended itinerary information corresponding to the travel activity in response to a second user operation for at least one target service item in the service card, wherein the recommended itinerary information at least represents an itinerary planning result for an activity node corresponding to the target service item.

2. The method of claim 1, wherein the service card has a first card appearance, and the first card appearance is determined based on the constraint condition corresponding to the user requirement data.

3. The method of claim 1, wherein the generating a corresponding service card on an interactive interface according to the user requirement data, comprises:
obtaining a card feature of the service card according to the user requirement data, wherein the card feature is at least used to determine a service item in the service card; and
generating the corresponding service card on the interactive interface according to the card feature.

4. The method of claim 3, wherein the user requirement data comprises first structured data representing the constraint condition; and the obtaining a card feature of the service card according to the user requirement data, comprises:
obtaining field content of a first target field of the first structured data, wherein the first target field is configured to record an activity type for an activity node; and
obtaining the card feature of the service card according to the field content of the first target field.

5. The method of claim 4, wherein the generating the corresponding service card on the interactive interface according to the card feature, comprises:
obtaining a corresponding card template according to the card feature;
obtaining a service item that meets the constraint condition according to field content of a second target field in the first structured data, wherein the second target field is configured to record a service identification of the service item that meets the constraint condition under an activity type corresponding to the first target field; and
loading the service item that meets the constraint condition into the card template to obtain a card object, and rendering the card object into the interactive interface to display the service card.

6. The method of claim 1, wherein the first user operation comprises at least two requirement input operations, and the obtaining user requirement data in response to a first user operation, comprises:
obtaining a corresponding sub-requirement information item in response to each requirement input operation, wherein the sub-requirement information item is used to represent a sub-constraint condition that constitutes the constraint condition; and
obtaining the user requirement data according to a set comprising at least two sub-requirement information items.

7. The method of claim 6, wherein the obtaining a corresponding sub-requirement information item in response to each requirement input operation, comprises:
acquiring prompt rule information for the travel activity, wherein the prompt rule information is used to represent a prompt information link for the constraint condition, the prompt information link comprises at least two link nodes, and the link node is configured to represent first prompt information for a constraint dimension that is fixedly set; and
setting a first link node of the prompt information link as a target link node, and cyclically performing following steps until a preset condition is met:
obtaining corresponding first prompt information according to the target link node, and displaying the first prompt information on the interactive interface,
obtaining corresponding input content in response to an input operation of a user, and detecting the input content,
in response to the input content matching the constraint dimension corresponding to the first prompt information, saving the input content as a sub-requirement information item corresponding to the target link node, and setting a next link node of the prompt information link as the target link node, and
in response to the input content not matching the constraint dimension corresponding to the first prompt information, displaying a first preset text,
wherein the preset condition comprises the target link node being empty or not present.

8. The method of claim 7, further comprising:
after obtaining a sub-requirement information item corresponding to each link node of the prompt information link, displaying second prompt information on the interactive interface, wherein the second prompt information is used to indicate the user to input custom input content, and the custom input content is used to represent a constraint dimension that is not fixedly set; and
obtaining the custom input content in response to the input operation of the user, and saving the custom input content as a corresponding sub-requirement information item.

9. The method of claim 1, wherein the generating recommended itinerary information corresponding to the travel activity in response to a second user operation for at least one target service item in the service card, comprises:
acquiring first structured data corresponding to the user requirement data;
updating field content of a third target field corresponding to the target service item in the first structured data in response to the second user operation for the target service item, to generate second structured data, wherein the third target field is configured to record a selected state of a service item; and
performing itinerary planning based on the second structured data to obtain the recommended itinerary information.

10. An interactive itinerary planning apparatus, comprising:
an interaction module, configured to obtain user requirement data in response to a first user operation, wherein the user requirement data is used to represent a constraint condition for a travel activity;
a display module, configured to generate a corresponding service card on an interactive interface according to the user requirement data, wherein the service card comprises at least one service item that meets the constraint condition, and the service item corresponds to one activity node of the travel activity; and
a processing module, configured to generate recommended itinerary information corresponding to the travel activity in response to a second user operation for at least one target service item in the service card, wherein the recommended itinerary information at least represents an itinerary planning result for an activity node corresponding to the target service item.

11. An electronic device, comprising: at least one processor and a memory;
wherein the memory stores a computer-executable instruction; and
the at least one processor executes the computer-executable instruction stored in the memory, to cause the at least one processor to execute the interactive itinerary planning method of any one of claims 1 to 9.

12. A computer-readable storage medium, wherein a computer-executable instruction is stored in the computer-readable storage medium, and when the computer-executable instruction is executed by a processor, the processor implements the interactive itinerary planning method of any one of claims 1 to 9.

13. A computer program product, comprising a computer program, wherein when the computer program is executed by a processor, the processor implements the interactive itinerary planning method of any one of claims 1 to 9.
